# EUROPÄISCHE PATENTSCHRIFT

(11) **EP 1 215 463 B1**
(45) Veröffentlichungstag und Bekanntmachung des Hinweises auf die Patenterteilung: **04.10.2006**
(21) Anmeldenummer: 00127615.3
(22) Anmeldetag: 16.12.2000
(51) Int. Cl.: F28F 13/18, C04B 41/45, C04B 38/00

(54) **Oberflächenbeschichtung zur verbesserten Wärmeübertragung**
Surface coating for increased heat transfer
Revêtement de surface pour transfert de chaleur amélioré

(43) Veröffentlichungstag der Anmeldung: 19.06.2002
(73) Patentinhaber: Siebel, Lothar, Prof. Dr.-Ing., 52066 Aachen (DE)
(72) Erfinder: Mainka, Dieter, Dipl.-Ing., 52224 Stolberg (DE); Siebel, Lothar, Prof.Dr.-Ing., 52066 Aachen (DE)
(74) Vertreter: Müller, Enno

(56) Entgegenhaltungen:
- DE-A- 4 418 214
- DE-A- 19 812 317
- US-A- 4 048 980
- PATENT ABSTRACTS OF JAPAN vol. 017, no. 282 (M-1420), 31. Mai 1993 (1993-05-31) & JP 05 009986 A (MISAWA HOMES CO LTD), 19. Januar 1993 (1993-01-19)

## Beschreibung

Die Erfindung betrifft die Verwendung einer Oberflächenbeschichtung auf Decken und Wänden zur Verbesserung der Wärmeübertragung zwischen Oberflächen von Innenräumen und Umgebung. Hierbei werden dünne Beschichtungen (<< 1 mm) mit massearmen Oberflächen (Membranen) auf Bauteilen zur Verbesserung der Wärmeübertragung von der Umgebung auf den Beschichtungsuntergrund genutzt.

Bisherige Maßnahmen zielen auf folgende Effekte ab
- Maximierung der Wärmestrahlung dadurch, dass an den Oberflächen Materialien mit einem hohen Emissionsgrad verwendet werden.
- Maximierung der Konvektion dadurch, dass eine erzwungene Strömung an den Oberflächen hergestellt wird.
- Vergrößerung der Wärmeübertragungsfläche (z.B. Kühlrippen).

Aufgabe der Erfindung ist es, eine vorteilhafte Verwendung einer Oberflächenbeschichtung anzugeben.

Oberflächen, welche unterschiedlich zur Umgebung temperiert sind, streben durch Wärmestrahlung und Konvektion einen Temperaturausgleich an. Da bei Wärmeströmen zwischen verschiedenen Medien zuweilen eine hohe Wirksamkeit der Wärmeübertragung gewünscht wird, besteht Bedarf darin, diese durch entsprechende Effekte zu verbessern. Hierdurch lassen sich auch Verbesserungen beim Wärmeschutz von Gebäuden herbeiführen.

Zur Lösung der Aufgabe wird eine Verwendung gemäß Anspruch 1 vorgeschlagen.

Der Wärmeübergang wird bei einer sehr dünnen Beschichtung, die aus einem großen Anteil von Membranen (Hohlkügelchen, Bläschen, bubbles) in einem gut wärmegleitfähigen Trägermaterial (Bindemittel) besteht, durch langfristig verbessert, weil die obere Membranschicht (luftseitige Schicht) thermisch flink ist und sich daher wie ein "Wärmeauge" an wechselnde Strahlungsverhältnisse der Gesamtumgebung schnell anpassen möchte. Der Wärmetransport von den Membranoberflächen auf die dahinter liegenden Schichten erfolgt über den Mechanismus der Wärmeleitung, der hier insbesondere über die Stege des Trägermaterials zwischen den Membranen erfolgt. Da eine Membran jedoch bei Wärmeeinwirkung augenblicklich beidseitig die gleiche Temperatur aufweist, wird auch ein entsprechender Wärmeanteil über Strahlung zum Untergrund weitergeleitet. Die natürlicherweise geringe Dämmeigenschaft einer dünnen Beschichtung hat den Vorteil, dass in starkem Maße Wärme von der äußeren Oberfläche auf die dahinter liegenden Schichten übertragen wird. Langfristig kommt es zu einem hohen Wärmeaustausch nicht dadurch, daß die Wärmeübertragung nicht der klassischen Betrachtung entspräche, sondern weil an der äußeren Oberfläche eine geringe Masse existiert, die auch bei geringen Temperaturdifferenzen insbesondere von der Wärmestrahlung stark beeinflusst und durchdrungen wird. Hierdurch und wegen des sehr geringen Wärmedämmwertes der Trägermaterialstege in der Beschichtung wird die Wärme von der Membranoberfläche in den Beschichtungsuntergrund gut übertragen. Durch diesen Effekt wird der Oberfläche schneller Wärme entzogen und die thermisch bedingte Luftkonvektion gemindert.

In Innenräumen wird bei massiven Bauteilen der speicherfähige Untergrund mittels der erfindungsgemäßen Beschichtung allmählich auf das mittlere Strahlungsniveau thermisch besonders gut angepasst. Vorteilhaft an diesem Effekt ist, dass Wärme, die in den Raum eingetragen wird, z.B. über Heizkörper oder durch solare Zustrahlung, auf alle so behandelten Bauteile (Decke und Wände) gut übertragen wird. Hierdurch werden die solaren Gewinne günstiger genutzt, weil größere Speichermassen erschlossen werden und eine Überheizung des Raumes weniger stattfindet. Als Folge dessen wird das thermische Raumklima durch die Gleichheit der Oberflächentemperaturen günstig beeinflusst, so dass eine asymmetrische Wärmebelastung für Personen minimiert bzw. auch aufgehoben wird. Bessere Behaglichkeit bedeutet langfristig bessere Vitalität und damit eine geringere Neigung zur Erkrankung. Die Raumlufttemperatur, welche ein Parameter für das Raumklima ist, kann zur Erzielung der thermischen Behaglichkeit niedriger als unter anderen Bedingungen eingestellt werden. Die thermische Raumklimasituation ist besonders günstig, wenn auch die thermische Trägheit an der Bodenoberfläche mittels Teppichbelägen sehr klein ist. Dadurch, dass die Raumlufttemperaturen kleiner gehalten werden können, ist auch die Luftverunreinigung durch ausdiffundierende Luftbelastungsstoffe geringer. Durch die Gleichheit der Oberflächentemperaturen und die hierdurch verminderte thermisch bedingte Luftkonvektion fällt die Temperaturschichtung im Raum und die Lufttemperatur im Kopfbereich etwas geringer aus als bei üblichen Verhältnissen, was grundsätzlich günstig ist.

Bei Verwendung der erfindungsgemäßen Beschichtung als Außenbeschichtung wird die solare Energienutzung dadurch verbessert, daß die äußere Oberfläche durch ihre geringe Wärmeträgheit auch bei geringer solarer Zustrahlung leichter beeinflusst wird und durch den äußerst geringen Dämmwert zu den darunter liegenden Schichten eine gute Wärmeübertragung zu speicherfähigen Bauteilen und Baustoffen gegeben ist. Der gleiche Effekt führt bei nächtlicher Abstrahlung in den kalten Kosmos zu etwas niedrigeren Außenoberflächentemperaturen. Diese können allerdings durch die Luftkonvektion, insbesondere bei Wind, nicht beliebig sinken, weil ansonsten von der Luft entsprechend Wärme zugeführt wird. Dieser Effekt der etwas größeren nächtlichen Auskühlung ist bei einer gewissen Speicherfähigkeit der äußeren Bauteilschale im Mittel betrachtet nicht erheblich, weil die hohen solaren Gewinne dies mehr als kompensieren.

Der strukturbedingte Effekt wird für verschiedene wärmetechnische Anforderungen, z.B. für Verbesserung der Energienutzung, Verbesserung des thermischen Raumklimas und Verminderung von Schimmelpilzbildung, genutzt. Thermisch flinke Membranen übertragen Wärme auch bei kleinen Temperaturdifferenzen gut auf den wärmespeicherfähigen Untergrund.

Ein wesentlicher Vorteil der Verwendung liegt darin, daß sowohl neue Bauteile und Anwendungsmöglichkeiten, als auch die bereits vorhandenen massiven Bauteile im Gebäudebestand für die Verwendung mit der erfindungsgemäßen Beschichtung geeignet sind. Die Beschichtung kann mittels üblicher Anstrichmethoden auf die Unterkonstruktion aufgetragen werden. Durch die vorhandenen Vertriebsstrukturen, das heißt Farbenhersteller, Handel und Malerbetriebe, ist die gewerbliche Nutzung möglich.

## Patentansprüche

1. Verwendung einer Oberflächenbeschichtung auf Decken und Wänden zur Verbesserung der Wärmeübertragung zwischen Oberflächen von Innenräumen und Umgebung, wobei die Beschichtung aus einem großen Anteil von massearmen Membranen in Form von Holzkügelchen, Bläschen, Bubbles in einem gut wärmeleitfähigen Trägermaterial aus Bindemittel besteht und in sehr dünner Schicht, << 1 mm, auf die wärmespeicherfähigen Bauteile aufzutragen ist, wobei die zwischen den Hohlkörpern gebildeten Stege des Trägermaterials wärmeleitende Funktion besitzen wodurch langfristig ein besserer Wärmestrahlungsaustausch zwischen den Oberflächen von Innenräumen bei geringer Konvektion erfolgen kann und damit die Oberflächentemperaturen im Raum sehr nahe beieinander liegen oder sogar gleich sein können, wodurch die thermische Behaglichkeit in Räumen verbessert wird.

## Claims

1. Use of a surface coating on ceilings and walls for improving heat transfer between surfaces of interior spaces and their surroundings, the coating consisting of a large proportion of low mass membranes in the form of wood pellets, vesicles or bubbles in a carrier material for a binding agent, the carrier material having good heat conducting properties, and the coating to be applied in a very thin layer, << I mm, to the structural components which are capable of heat storage, the webs of the carrier material formed between the hollow bodies having a heat conducting function whereby over an extended period a better exchange of heat by radiation may take place between the surfaces of interior spaces but there is very little exchange of heat by convection and the surface temperatures in the space thereby remain very close to one another or they may even be the same, whereby thermal comfort in rooms is improved.

## Revendications

1. Utilisation d'un revêtement de surface sur des plafonds et des murs pour l'amélioration du transfert de chaleur entre les surfaces de locaux intérieurs et l'environnement, le revêtement consistant en une grande proportion de membranes de faible masse sous forme de billes de bois, de bulles, de « bubbles » en un matériau support bon conducteur de la chaleur fait de liant, devant être appliqué en couche très mince, << 1 mm, sur les composants capables d'emmagasiner de la chaleur, sachant que les parois du matériau support formées entre les corps creux possèdent une fonction conductrice de la chaleur par laquelle, à longue terme, un meilleur échange de rayonnement thermique peut s'effectuer entre les surfaces des locaux intérieurs pour une faible convection, et ainsi les températures des surfaces dans le local se trouvent très proches les unes des autres et peuvent même être égales, par quoi le bien-être thermique dans les locaux est amélioré.
